# EUROPÄISCHE PATENTSCHRIFT

(11) **EP 0 744 310 B1**
(45) Veröffentlichungstag und Bekanntmachung des Hinweises auf die Patenterteilung: **15.03.2000**
(21) Anmeldenummer: 96107630.4
(22) Anmeldetag: 14.05.1996
(51) Int. Cl.: B60J 5/06, B61D 19/00, E05F 15/14, E05B 13/00, E05B 15/00

(54) **Entriegelungs- und Verriegelungseinrichtung für eine Schwenkschiebetür**
Unlocking and locking device for swinging plug door
Dispositif de déverrouilage et de verrouilage pour porte coulissante et pivotante

(30) Priorität: 24.05.1995 CH 153695
(43) Veröffentlichungstag der Anmeldung: 27.11.1996
(73) Patentinhaber: ABB Daimler-Benz Transportation (Schweiz) AG, 8050 Zürich (CH)
(72) Erfinder: Daniel, Peter, Dipl.-Ing., 4133 Pratteln (CH); Bulsing, Jos, 9289 HS Drogeham (NL)
(74) Vertreter: Kaiser, Helmut

(56) Entgegenhaltungen:
- EP-A- 0 705 955
- DE-A- 1 553 459
- DE-A- 4 230 888
- DE-C- 954 786
- DE-C- 4 124 944
- DE-C- 4 203 868
- DE-U- 8 601 065
- FR-A- 1 415 180
- GB-A- 2 118 667
- US-A- 3 346 291

## Beschreibung

Die Erfindung betrifft eine Entriegelungs- und Verriegelungseinrichtung für eine Schwenkschiebetür, die eine Türbewegung ermöglicht bzw. verhindert, umfassend ein Betätigungsorgan, welches eine Drehmechanik betätigt, die mit einer Drehbewegung eine Schwenk- und Verriegelungsmechanik für eine manuelle Türbewegung freisetzt bzw. gegen eine manuelle Türbewegung sichert. Eine derartige Einrichtung ist aus der DE-A-4 230 888 bekannt.

Aus der Patentschrift DE-C-4 124 944 ist eine Handentriegelung mit einem Magneten für eine Schiebetür bekannt geworden, mit der auch im stromlosen Zustand ohne Hilfsenergie eine sichere Entriegelung möglich ist. Dazu wird ein bistabiler Magnet verwendet, der eine durchgehende Achse hat, die an beiden Seiten aus dem Magneten herausragt. Einerseits ist diese Achse mit einem Gabelkopf verbunden, der über ein Hebelsystem die Verriegelung einer automatischen Schiebetür bewerkstelligt. Auf der anderen Seite der durchgehenden Achse befindet sich eine Schubplatte, die durch eine Schieberplatte betätigt wird, wobei die Schieberplatte mit einem Bowdenzug verbunden ist. Durch die Schubbewegung der Schubplatte wird der stromlose Magnet aus einer ersten Stellung herausgedrückt und in eine zweite Stellung überführt. Dabei wird die Entriegelung über den Gabelkopf an der Schiebetür durchgeführt.

In der Schrift DE-A-42 30 888 wird eine Hand-Notbetätigung in Form einer drehbaren Scheibe zum Entriegeln und Öffnen einer Schwenkschiebetür offenbart. Die GB-A-2 118 667 offenbart eine Entriegelungsvorrichtung, welche einen Hebel zum manuellen Entriegeln bzw. Öffnen einer Schiebetür aufweist.

Ein Nachteil der bekannten Einrichtungen liegt darin, dass die offenen Türen nach einem Ausfall der Energieversorgungssysteme nicht mehr verriegelbar sind. Beispielsweise bei Eisenbahnwagen ist es wichtig, dass die Türen nach einem Stromausfall wieder verriegelt werden können. Damit wird verhindert, dass erneut Passagiere in den nicht betriebsbereiten Zug einsteigen.

Hier will die Erfindung Abhilfe schaffen. Die Erfindung, wie sie in den Ansprüchen gekennzeichnet ist, löst die Aufgabe, die Nachteile der bekannten Einrichtung zu vermeiden und eine Einrichtung zu schaffen, mit Schwenkschiebetüren mit komplexen Schwenkschiebebewegungen bei Ausfall der Energiesysteme zuverlässig entriegelt und verriegelt werden können.

Die durch die Erfindung erreichten Vorteile sind im wesentlichen darin zu sehen, dass eine Notentriegelung und eine Notverriegelung mit einem einzigen Betätigungsorgan, insbesondere mit einem Handgriff möglich ist. Dadurch kann die Tür im Notfall entriegelt und geöffnet bzw. geschlossen und verriegelt werden. Durch die Entriegelungs- und Verriegelungseinrichtung werden die in den Notsituationen immer wieder auftretenden menschlichen Bedienfehler vermieden und ein sicheres Verlassen oder Sperren des durch die Tür abgegrenzten Raumes gewährleistet.

Im folgenden wird die Erfindung anhand von lediglich einen Ausführungsweg darstellenden Zeichnungen näher erläutert. Es zeigen:
- Fig. 1: einen Handgriff zur Betätigung einer Entriegelungs- und Verriegelungseinrichtung,
- Fig. 2: Einzelheiten der Entriegelungs- und Verriegelungseinrichtung,
- Fig.3: eine Einrichtung mit einem Energiespeicher zur selbstätigen Verriegelungeiner Schwenkschiebetür,
- Fig. 4: die Einrichtung gemäss Fig. 3 in Totpunktlage,
- Fig. 5: die Einrichtung gemäss Fig. 3 bei geschlossener Tür,
- Fig. 6: eine Schwenk- und Verriegelungsmechanik zur Durchführung der Schwenkbewegung, der Entriegelung und der Verriegelung der Schwenkschiebetür,
- Fig. 7: eine Einrichtung zur selbsttätigen Verriegelung der Schwenkschiebetür mittels beim manuellen Schliessvorgang erzeugter Energie und
- Fig. 8: einen Handgriff einer nicht erfindungsgemäßen Einrichtung zum Öffnen der Schwenkschiebetür.

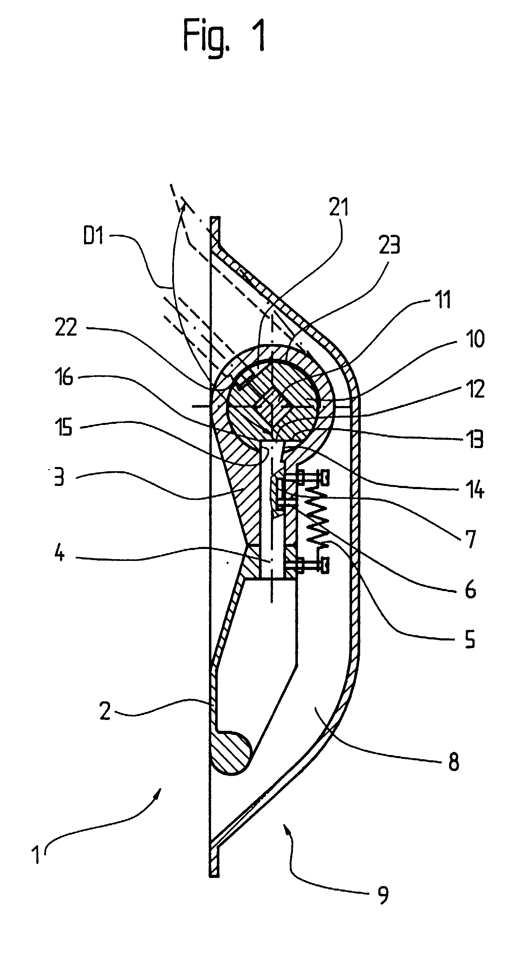

In der Fig. 1 ist mit 1 ein Handgriff mit einem Griffteil 2 und einem Wellenteil 3 bezeichnet. Am Griffteil 3 ist ein erster Bolzen 4 angeordnet, der den Griffteil 2 im Wellenteil 3 führt. Entgegen einer von einer ersten Rückstellfeder 5 erzeugten Federkraft kann der Griffteil 2 gegenüber dem Wellenteil 3 in achsialer Richtung verschoben werden. Der Verschiebungsweg wird durch einen am Wellenteil 3 angeordneten zweiten Bolzen 6 begrenzt, der in eine erste Ausnehmung 7 des ersten Bolzens 4 ragt. Der Wellenteil 3 des in einer Mulde 8 einer Wand 9 eingelassenen Handgriffes 1 ist an einer zweiten Welle 10 angeordnet, die wiederum an einer den Drehpunkt des Handgriffes 1 bildenden ersten Welle 11 angeordnet ist. In der gezeigten Ruhestellung des Handgriffes 1 greift eine erste Nase 12 des ersten Bolzens 4 in eine zweite Ausnehmung 13 der zweiten Welle 10 ein. Die erste Nase 12 weist eine Verriegelungsseite 14 und eine Entriegelungsseite 15 auf , die beim Drehen des Handgriffes 1 an einer ersten Entriegelungskante 16 der zweiten Ausnehmung 13 angreift.

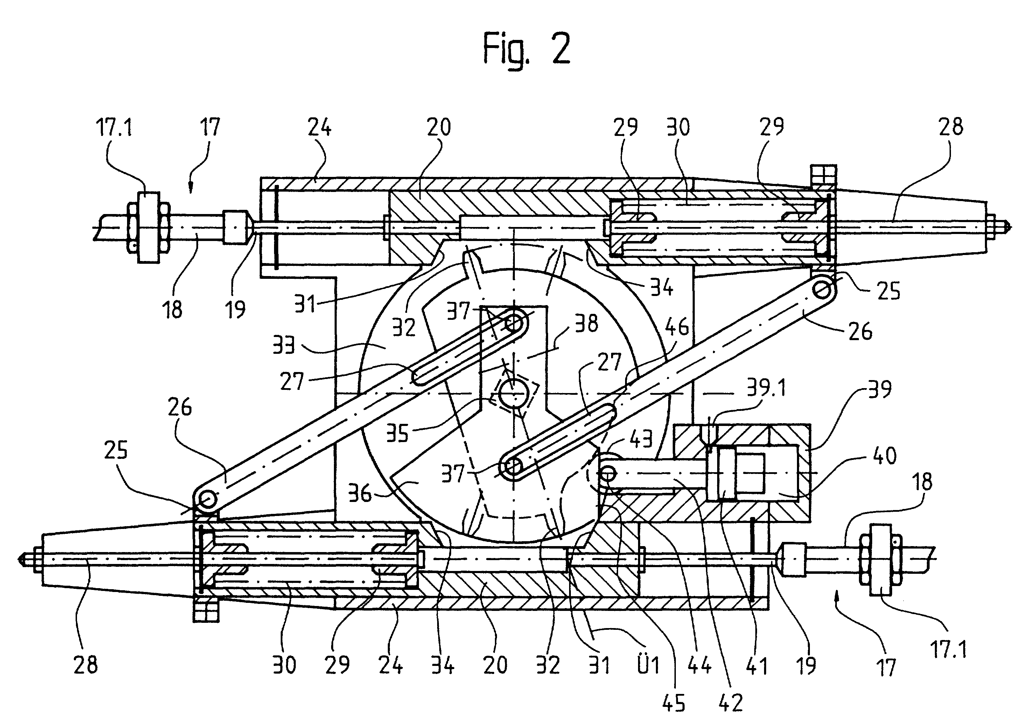

Bei der Entriegelung einer Tür, beispielsweise einer Schwenkschiebetür wird der Handgriff 1 von der Ruhestellung in die mit unterbrochener Linie gezeigte Stellung gebracht. Dabei wird die zweite Welle 10 mittels der ersten Nase 12 mitgenommen und eine mit D1 bezeichnete erste Drehbewegung ausgeführt, die von der ersten Welle 11 auf ein nicht dargestelltes Räderwerk übertragen wird, welches die Drehbewegung D1 auf eine nicht dargestellte Zahnstange überträgt. Die Zahnstange ist mit einem in der Fig. 2 dargestellten Bowdenzug 17 mit einer an einer Befestigung 17.1 angeordneten Scheide 18 und einer darin geführten Saite 19 verbunden, die die Linearbewegung der Zahnstange auf einen Schlitten 20 überträgt.

Bei der Verriegelung der Tür wird der Griffteil 2 des Handgriffs 1 nach unten gezogen und dabei die erste Nase 12 aus der zweiten Ausnehmung 13 gehoben. Dann wird der Handgriff 1 bei gezogenem Griffteil 2 nach oben in die mit unterbrochener Linie dargestellte Lage gedreht, in der die erste Nase 12 mittels der von der Rückstellfeder 5 erzeugten Federkraft in eine dritte Ausnehmung 21 der zweiten Welle 10 eintaucht. Beim Zurückdrehen des Handgriffs 1 greift die Verriegelungsseite 14 der ersten Nase 12 an einer ersten Verriegelungskante 22 der dritten Ausnehmung 21 an und dreht die zweite Welle 10 und die erste Welle 11 mit einer der Drehbewegung des Entriegelungsvorganges entgegensetzten Drehbewegung, die wiederum mittels des Räderwerkes, der Zahnstange und der Saite 19 des Bowdenzuges 17 auf den Schlitten 20 übertragen wird. Nach der Drehbewegung drückt eine Blattfeder 23 die erste Nase 12 aus der dritten Ausnehmung 21, wodurch die zweite Welle 10 vom Handgriff 1 abgekoppelt wird und vom Schlitten 20 zurückgedreht werden kann.

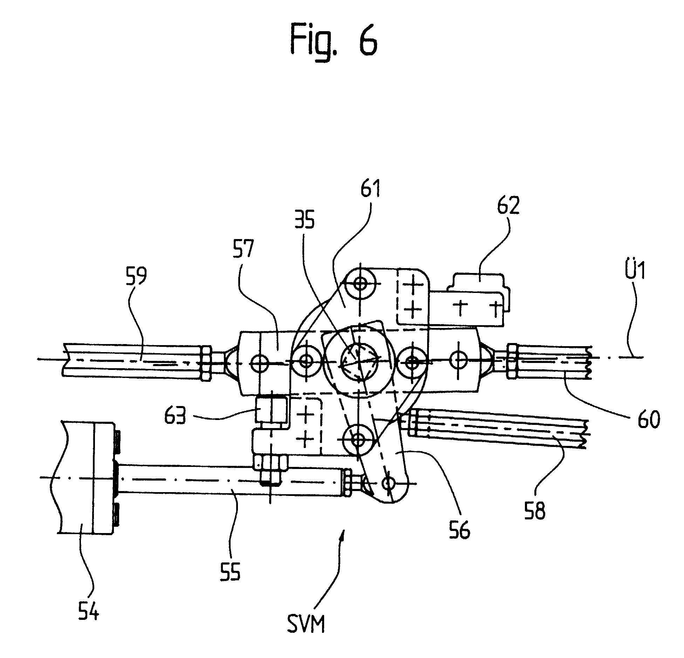

Fig. 2 zeigt Einzelheiten der Entriegelungs- und Verriegelungseinrichtung mit dem vom Handgriff 1 betätigten Schlitten 20, der in einem ersten Gehäuse 24 geführt wird. Am einen Ende ist der Schlitten 20 mit der Saite 19 des Bowdenzuges 17 verbunden, am anderen Ende ist eine erste Bride 25 angeordnet, an der eine Zugstange 26 mit einem Langschlitz 27 angelenkt ist. Im Schlitten sind entlang einer festen Schraube 28 verschiebbare erste Kolben 29 angeordnet, die die Bewegung des Schlittens 20 ausführen. Die ersten Kolben 29 beaufschlagen dabei eine zweite Rückstellfeder 30 mit einer Druckkraft. Eine erste Entriegelungskante 31 des Schlittens 20 dreht einen ersten Zahn 32 einer ersten Scheibe 33 im Uhrzeigersinn. Eine zweite Verriegelungskante 34 des Schlittens 20 dreht den ersten Zahn 32 der ersten Scheibe 33 im Gegenuhrzeigersinn. Die erste Scheibe 33 ist fest mit einem drehbaren Vierkant-Lagerzapfen 35 verbunden, der Bestandteil einer in Fig. 6 gezeigten Schwenk- und Verriegelungsmechanik für die Schwenkbewegung und Verriegelung der Schwenkschiebetür ist. Eine zweite Scheibe 36 mit einem dritten Bolzen 37 ist frei um die Drehachse des Vierkant-Lagerzapfens 35 drehbar. Die zweite Scheibe 36 wird einerseits mittels Langschlitz 27 geführter am dritten Bolzen 37 angreifender Zugstange 26 im Gegenuhrzeigersinn und andererseits mittels einer dritten Rückstellfeder 38 im Uhrzeigersinn in Drehbewegung versetzt. Ein mit 39 bezeichneter Vorrastzylinder weist eine Druckfeder 40 auf, die ohne Druckbeaufschlagung am Druckmitteleinlass 39.1 einen zweiten Kolben 41 mit einer ersten Kolbenstange 42 in die gezeigte Lage drückt. Bei Normalbetrieb wirkt der zweite Kolben 41 unter Druck der Druckfeder 40 entgegen und hebt eine erste Rolle 43 aus der Vorraststellung. Die erste Rolle ist an dem der Kolbenseite gegenüberliegenden Ende der ersten Kolbenstange 42 angeordnet und weist einen vierten Bolzen 44 auf, der in einer Übertotpunktlage Ü1 an einer Vorrastkante 45 der zweiten Scheibe 36 ansteht. Der Umfang der ersten Rolle 43 taucht dabei in eine vierte Ausnehmung 46 der ersten Scheibe 33 ein.

Im Normalfall entriegelt ein Türantrieb die Tür und hebt sie mit einer Schwenkbewegung aus dem Türrahmen. Dann wird die Tür mit einer Schiebebewegung entlang und parallel zu einer Wand bewegt. Der Antrieb der Tür kann beispielsweise mit pneumatischen oder elektromechanischen Mitteln erfolgen. Bei Stromausfall oder bei Ausfall der Druckluftversorgung wird zur manuellen Entriegelung der Tür der Handgriff 1 gemäss Fig. 1 nach oben geschwenkt. Die Schwenkbewegung wird mittels der Saite 19 auf den Schlitten 20 übertragen, der dabei mit seiner zweiten Entriegelungskante 31 den ersten Zahn 32 der ersten Scheibe 33 in eine Drehbewegung im Uhrzeigersinn versetzt und gleichzeitig die Bride 25 und den ersten Kolben 29 entlang der festen Schraube 28 schiebt. Der erste Kolben 29 drückt die zweite Rückstellfeder 30 zusammen. Die am Schlitten 20 angeordnete Bride 25 betätigt mittels der Zugstange 26 den dritten Bolzen 37, der die zweite Scheibe 36 in eine Drehbewegung im Gegenuhrzeigersinn versetzt. Die am Vierkant-Lagerzapfen 35 angeordnete erste Scheibe 33 dreht die in Fig. 6 gezeigte Schwenk- und Verriegelungsmechanik aus der Übertotpunktlage Ü1. Die Tür springt nun unter Einwirkung der umlaufenden Türdichtung und der manuellen Kraft aus dem Türrahmen. Im weiteren Verlauf der Drehbewegung der ersten Scheibe 33 und der zweiten Scheibe 36 wird die erste Rolle 43 mittels der am vierten Bolzen 44 angreifenden Vorrastkante 45 aus der Ausnehmung gehoben, sodass der Umfang der ersten Rolle 43 am Umfang der ersten Scheibe 33 abrollt. Die Tür kann nun mit einer Schiebebewegung geöffnet werden. Beim Zurückdrehen des Handgriffs 1 durch die Rückstellfeder 30 in seine Ruhelage bewegt sich der Schlitten 20 mit der Bride 25 und dem ersten Kolben 29 in seine Ausgangslage zurück. Die zweite Scheibe 36 wird mittels der dritten Rückstellfeder 38 selbsttätig in ihre Ausgangslage im Uhrzeigersinn zurückgedreht.

In Fig. 2 ist die Einrichtung mit dem Bowdenzug 17, dem Gehäuse 24 mit dem Schlitten 20, dem Kolben 29 mit der zweiten Rückstellfeder 30 und der Bride 25 mit der Zugstange 26 doppelt ausgeführt. Ein an der Aussenwand angeordneter Handgriff 1 betätigt die eine Einrichtung, ein an der Innenwand angeordneter Handgriff 1 betätigt die andere Einrichtung.

Beim Schliessen und Verriegeln ohne Hilfsenergie wird die Tür manuell mit einer Schiebebewegung entlang der Wagenwand und anschliessend mit einer Schwenkbewegung in den Türrahmen gestossen. Dabei wird der Vierkant-Lagerzapfen 35 zurückgedreht und mit ihm die erste Scheibe 33. Die erste Rolle 43 rollt in die vierte Ausnehmung 46 der sich im Gegenuhrzeigersinn drehenden ersten Scheibe 33. In der durch die vierte Ausnehmung 46 und erste Rolle 43 erzeugten Vorrast kann die Tür nicht mehr ohne Betätigung des Handgriffs 1 geöffnet werden.

Bei der manuellen Verriegelung der Tür muss der Vierkant-Lagerzapfen 35 noch um einige Grad bis in die Übertotpunktlage Ü1 gedreht werden, damit die in Fig. 6 gezeigte Schwenk-und Verriegelungsmechanik die Tür gegen unerlaubtes Öffnen von Innen und Aussen sichert. Dazu wird der in Fig. 1 gezeigte Griffteil 2 des Handgriffs 1 nach unten gezogen und der erste Bolzen 4 von der zweiten Welle 11 gelöst. Der gezogene Handgriff 1 wird dann nach oben gedreht und mittels des ersten Bolzens 4 in der dritten Ausnehmung 21 eingerastet. Anschliessend wird mit einer Drehbewegung des Handgriffs 1 im Gegenuhrzeigersinn der Schlitten 20 nach links bewegt, der mit seiner zweiten Verriegelungskante 34 am ersten Zahn 32 angreift und eine Drehbewegung der ersten Scheibe 33 im Gegenuhrzeigersinn bis zur gezeigten Übertotpunktlage Ü1 ausführt. Durch die Bewegung des Schlittens 20 wird die zweite Rückstellfeder 30 gespannt. Sobald der erste Bolzen 4 aus der dritten Ausnehmung 21 gehoben wird, wird der Schlitten 20 und die zweite Welle 10 des Handgriffs 1 mittels einer durch die gespannte zweite Rückstellfeder 30 erzeugten Federkraft in ihre Ausgangslage zurückgeschoben bzw. zurückgedreht.

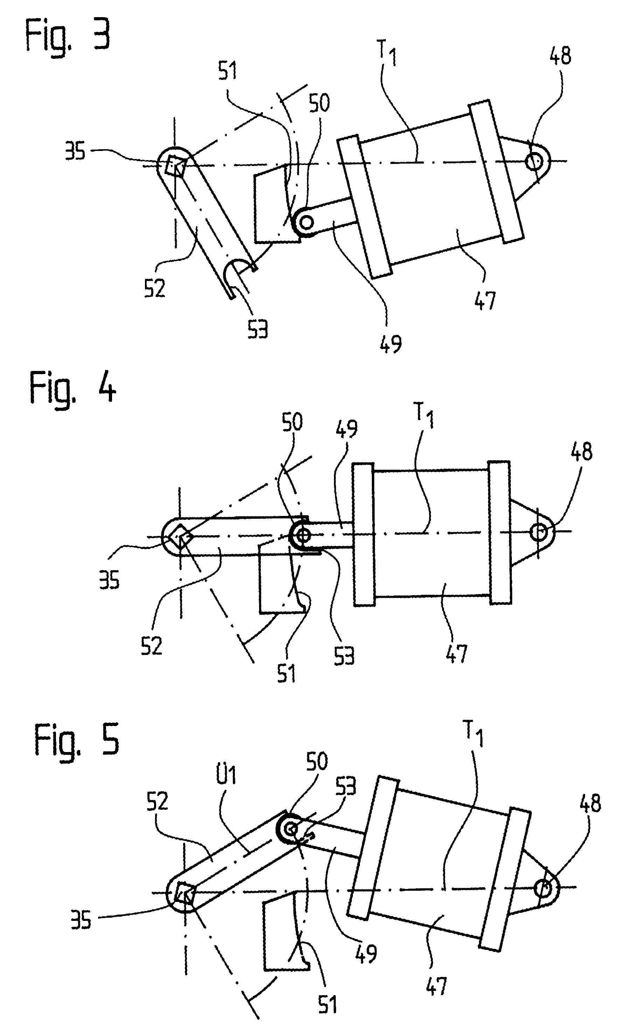

In den Fig. 3 bis 5 ist eine Einrichtung gezeigt, mit der die manuelle mit dem Handgriff 1 durchgeführte Verriegelung der Tür bei Ausfall der Energiesysteme auch durch eine automatische ohne Hilfsenergie arbeitende Verriegelung ausgeführt werden kann. Beim manuellen Schliessen der Tür, insbesondere beim Schiebevorgang wird die mittels eines Schiebezylinders, der bei Normalbetrieb die Schiebebewegung ausführt, erzeugte Druckluft in einem als Energiespeicher wirkenden ersten Zylinder 47 gespeichert. Der erste Zylinder 47 ist an einer ersten Achse 48 drehbar gelagert und weist eine zweite Kolbenstange 49 mit einer zweiten Rolle 50 auf, die an einer Steuerkurve 51 abrollt. Am Vierkant-Lagerzapfen 35 greift ein erster Hebel 52 mit einer Gabel 53 an. Beim manuellen Schwenkvorgang der Tür dreht sich der Vierkant-Lagerzapfen 35 und mit ihm der erste Hebel 52 mit der Gabel 53, die die auf der Steuerkurve 51 abrollende zweite Rolle 50 bis in eine Totpunktlage T1 des ersten Zylinders 47 mitnimmt. Nach der Totpunktlage T1 wird die im ersten Zylinder 47 gespeicherte Energie auf den Vierkant-Lagerzapfen 35 übertragen, der soweit gedreht wird, bis die in Fig. 6 gezeigte Schwenk- und Verriegelungsmechanik die Übertotpunktlage Ü1 erreicht hat.

Fig. 6 zeigt eine Schwenk- und Verriegelungsmechanik SVM, mit der die Schwenkschiebetür entriegelt und aus dem Türrahmen geschwenkt wird bzw. in den Türrahmen eingeschwenkt und verriegelt wird. Üblicherweise verläuft die Schwenkbewegung rechtwinklig zur Türwand und wird von im Kämpfer angeordneten Schwenkwagen ausgeführt, an denen die Einrichtung für die Schiebebewegung angeordnet ist. In der in Fig. 6 gezeigten Stellung der Schwenk- und Verriegelungsmechanik SVM ist die Tür in Übertotpunktlage Ü1 verriegelt.

Beim Öffnungsvorgang der Tür zieht beispielsweise ein pneumatischer Arbeitszylinder 54 eine dritte Kolbenstange 55 zurück und dreht dabei einen am Vierkant-Lagerzapfen 35 angeordneten Antriebshebel 56 im Uhrzeigersinn, wobei ein am Vierkant-Lagerzapfen 35 angeordneter Doppelhebel 57 aus der Übertotpunktlage Ü1 im Uhrzeigersinn gedreht wird. Eine am Antriebshebel 56 angelenkte erste Verriegelungsstange 58 treibt ein nicht dargestelltes Hebelwerk mit Verriegelungsbolzen zur Verriegelung und Entriegelung der unteren beiden Türecken an. Eine an der einen Seite des Doppelhebel 57 angelenkte erste Schwenkstange 59 und eine an der anderen Seite des Doppelhebels 57 angelenkte zweite Schwenkstange 60 betätigen über nicht dargestellte Winkelhebel die Schwenkwagen. Ein an einer Lagerplatte 61 angeordneter Endschalter 62 überwacht die Stellung des Doppelhebels 57.

Beim Schliessvorgang der Tür dreht die dritte Kolbenstange 55 den Antriebshebel 56 im Gegenuhrzeigersinn, wobei die Schwenkwagen eingefahren werden und der Doppelhebel 57 bis zur Übertotpunktlage Ü1 gedreht wird, die von einem mechanischen Anschlag 63 bestimmt wird.

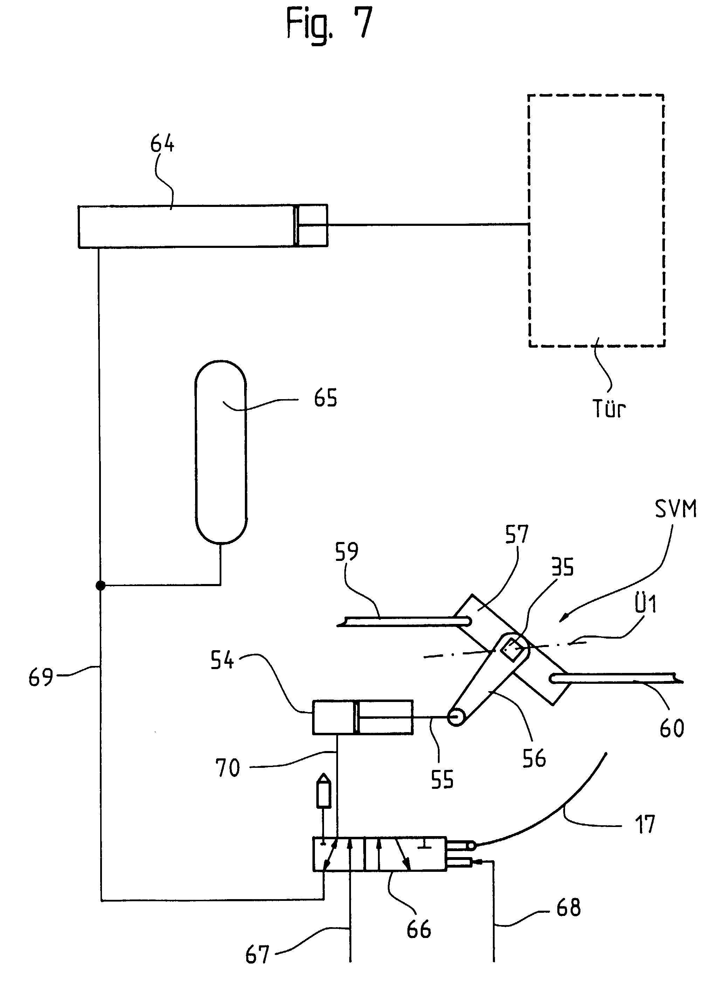

Fig. 7 zeigt eine Einrichtung mittels der die Schwenkschiebetür bei Ausfall der Energiesysteme automatisch ohne Hilfsenergie eingeschwenkt und verriegelt werden kann. Bei normalen Betriebsbedingungen wird die Schiebebewegung der Schwenkschiebetür mittels eines druckbeaufschlagbaren Schiebezylinders 64 ausgeführt. Beim Schliessvorgang ohne Hilfsenergie wird die Tür von Hand von der Offenstellung in die Geschlossenstellung geschoben, wobei der Schiebezylinder 64 als Druckerzeuger arbeitet. Die Druckluft wird in einem Druckbehälter 65 gespeichert. Der die Schwenkbewegung und Verriegelung der Tür ausführende Arbeitszylinder 54 gemäss Fig. 6 ist über ein 5/2-Wegeventil 66 an den Druckbehälter 65 angeschlossen. Während des manuellen Schiebevorganges wird der Kolben und die dritte Kolbenstange 55 des Arbeitszylinders 54 und die Schwenk- und Verriegelungsmechanik SVM in der in Fig. 7 gezeigten Lage gehalten. Der Arbeitszylinder 54 wird mechanisch freigesetzt, sobald eine nicht dargestellte Führungsrolle den Radius einer den Übergang zwischen der Schiebebewegung und der Schwenkbewegung abrundenden Schwenkkulisse erreicht hat. Der im Druckbehälter 65 gespeicherte Druck betätigt den Arbeitszylinder 54, der die Schwenk- und Verriegelungsmechanik SVM von der in Fig. 7 gezeigten Lage in die in Fig. 6 gezeigte Lage bringt. Dabei wird die Tür eingeschwenkt und der Doppelhebel 57 bis zur Übertotpunktlage Ü1 gedreht.

Der Arbeitsdruck für den Arbeitszylinder 54 wird dem 5/2-Wegeventil 66 mittels einer ersten Druckleitung 67 und der Steuerdruck für das 5/2-Wegeventil 66 mittels einer zweiten Druckleitung 68 zugeführt. Eine dritte Druckleitung 69 verbindet den Druckbehälter 65 mit dem 5/2-Wegeventil 66 und eine vierte Druckleitung 70 verbindet das 5/2-Wegeventil 66 mit dem Arbeitszylinder 54.

Bei Ausfall der Energiesysteme kann die Tür mittels Handgriff 1, Bowdenzug 17 und Entriegelungs- und Verriegelungseinrichtung wie in Fig. 1 und 2 gezeigt im Notfall entriegelt und ausgeschwenkt werden.

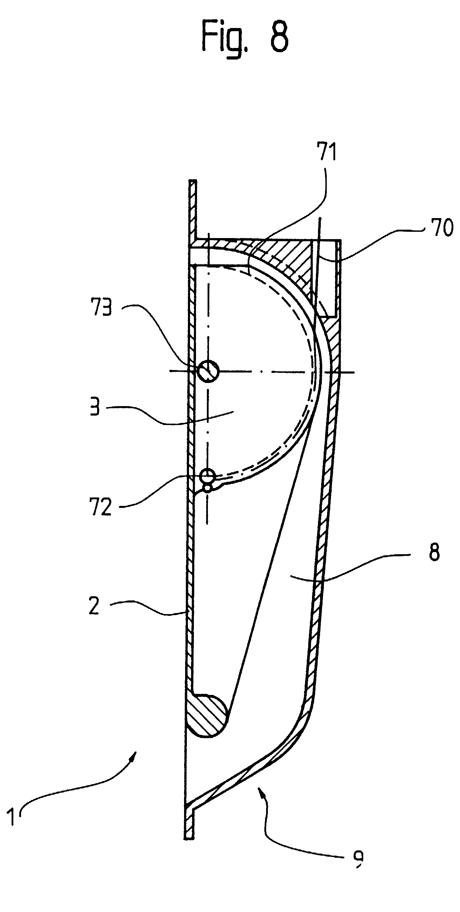

In einer weiteren, nicht erfindungsgemässen Variante kann die Tür mittels eines gegenüber der Fig. 1 vereinfachten Handgriffes 1 gemäss Fig. 8 und eines nur Zugkräfte übertragenden Bowdenzuges 17 im Notfall entriegelt und ausgeschwenkt werden, wobei der Bowdenzug 17 die vom vereinfachten Handgriff 1 erzeugte Zugkraft direkt auf den Vierkant-Lagerzapfen 35 überträgt. Der vereinfachte Handgriff 1 weist einen Griffteil 2 und einen halbkreisförmigen Wellenteil 3 auf, wobei ein schematisch dargestelltes Seil 70 des Bowdenzuges 17 auf einem ersten Viertelkreis des Wellenteils 3 in einer Nut 71 liegt und am griffteilseitigen Ende des Wellenteil-Halbkreises an einem Punkt 72 mit dem Wellenteil 3 verbunden ist. Der Handgriff 1 ist um eine Achse 73 drehbar. Beim Drehen des Griffteiles 3 aus der Mulde 8 dreht der Punkt 72 mit, wobei das Seil 70 in die Nut 71 des zweiten Viertelkreises des Wellenteiles 3 zu liegen kommt. Die Seilbewegung wird am anderen Bowdenzugende auf einen nicht dargestellten am Vierkant-Lagerzapfen 35 angeordneten Hebel übertragen, der die Schwenk- und Verriegelungsmechanik SVM entriegelt und die Tür ausschwenkt. Gleichzeitig betätigt der Bowdenzug 17 auch die Entlüftung des 5/2-Wegeventils 66. Danach kann die Tür von Hand in die Offenstellung geschoben werden. Die Rückstellung des Handgriffes 1 erfolgt mittels einer am anderen Bowdenzugende angeordneten nicht dargestellten Zugfeder.

## Patentansprüche

1. Entriegelungs- und Verriegelungseinrichtung für eine Schwenkschiebetür, die eine Türbewegung ermöglicht bzw. verhindert umfassend ein Betätigungsorgan (1,17,20,47), welches eine Drehmechanik (33,35,36) betätigt, die mit einer Drehbewegung eine Schwenk- und Verriegelungsmechanik (SVM) für eine manuelle Türbewegung freisetzt bzw. gegen eine manuelle Türbewegung sichert, dadurch gekennzeichnet, dass
(a) das Betätigungsorgan einen drehbaren Handgriff (1) mit einem Griffteil (2) und einem daran angeordneten Wellenteil (3) aufweist,
(b) am Griffteil (2) ein erster Bolzen (4) angebracht ist, der vom Wellenteil (3) geführt ist,
(c) der erste Bolzen (4) eine Nase (12) aufweist, die eine Veriegelungsseite (14) und eine Entriegelungsseite (15) umfasst und
(d) am Wellenteil (3) drehbar eine Welle (10) angeordnet ist,
wobei die Entriegelungsseite (15) bei Drehung des Handgriffs (1) nach oben an einer Entriegelungskante (16) einer Ausnehmung (13) der Welle (10) angreift und, nachdem der Handgriff(1) nach unten und wieder nach oben gezogen wird, die Verriegelungsseite (14) bei Drehung des Handgriffs (1) nach unten an einer Verriegelungskante (22) einer weiteren Ausnehmung (21) der Welle (10) angreift.

2. Einrichtung nach Anspruch 1, dadurch gekennzeichnet, dass die Drehbewegung der Welle (10) mittels Räderwerk mit Zahnstange auf einen Bowdenzug (17) übertragen wird.

3. Einrichtung nach Anspruch 2, dadurch gekennzeichnet, dass am ersten Bolzen (4) eine Ausnehmung (7) angeordnet ist, in die ein am Wellenteil (3) angeordneter zweiter Bolzen (6) eingreift, der beim Ziehen des Handgriffs (1) den Weg des Griffteils (2) mit dem ersten Bolzen (4) begrenzt, wobei die Nase (12) des ersten Bolzens (4) aus einer der Ausnehmungen (13, 21) der Welle (10) gehoben wird.

4. Einrichtung nach einem der vorhergehenden Ansprüche,
dadurch gekennzeichnet,
dass mindestens ein in einem Gehäuse (24) angeordneter vom Bowdenzug (17) betätigter Schlitten (20) vorgesehen ist, der die Drehbewegung des Handgriffs (1) auf eine erste Scheibe (33) überträgt, die an einem die Schwenk- und Verriegelungsmechanik (SVM) betätigende Vierkant-Lagerzapfen (35) angeordnet ist.

5. Einrichtung nach Anspruch 4,
dadurch gekennzeichnet,
dass am Schlitten (20) eine Zugstange (26) angelenkt ist, die eine zweite Scheibe (36) betätigt, die eine erste Rolle (43) aus einer an der ersten Scheibe (33) angeordneten Ausnehmung (46) hebt, in der die erste Rolle (43) die Schwenkschiebetür in der Vorrastlage verriegelt.

6. Einrichtung nach einem der vorhergehenden Ansprüche,
dadurch gekennzeichnet,
dass ein Energiespeicher (47, 65) vorgesehen ist, in dem mit der manuellen Schiebebewegung der Tür erzeugte Energie gespeichert wird, mit der die Schwenk- und Verriegelungsbewegung der Schwenk- und Verriegelungsmechanik (SVM) ausgeführt wird.

7. Einrichtung nach Anspruch 6,
dadurch gekennzeichnet,
dass ein drehbar angeordneter erster Zylinder (47) mit einer eine zweite Rolle (50) tragenden zweiten Kolbenstange (49) vorgesehen ist, wobei die zweite Rolle (50) bis zu einer Totpunktlage (T1) von einer Steuerkurve (51) geführt wird und dass ein am Vierkant-Lagerzapfen (35) angeordneter erster Hebel (52) mit einer Gabel (53) vorgesehen ist, die an der zweiten Kolbenstange (49) angreift und diese über die Totpunktlage (T1) bewegt, nach der mit der im ersten Zylinder gespeicherten Energie die Schwenk- und Verriegelungsmechanik (SVM) verriegelt wird.

8. Einrichtung nach Anspruch 6,
dadurch gekennzeichnet,
dass bei der manuellen Schiebebewegung normalerweise ein die Schiebebewegung der Tür ausführender Schiebezylinder (64) als Druckerzeuger wirkt und ein Druckbehälter (65) zur Speicherung der Druckluft vorgesehen ist, mit der ein Arbeitszylinder (54) zur Ausführung der Schwenk- und Verriegelungsbewegung der Schwenk- und Verriegelungsmechanik (SVM) beaufschlagt wird.

## Claims

1. Unlocking and locking device for a swing-and-slide door, which allows or prevents a door movement, comprising an actuating member (1, 17, 20, 47) which actuates a rotary mechanism (33, 35, 36) which, by means of a rotational movement, releases a pivoting and locking mechanism (SVM) for manual door movement or secures the said mechanism against manual door movement, characterized in that
(a) the actuating member has a rotatable handle (1) with a grip part (2) and with a shaft part (3) arranged on the latter,
(b) a first bolt (4), which is guided by the shaft part (3), is mounted on the grip part (2),
(c) the first bolt (4) has a nose (12) which comprises a locking side (14) and an unlocking side (15), and
(d) a shaft (10) is arranged rotatably on the shaft part (3), during the upward rotation of the handle (1) the unlocking side (15) engaging on an unlocking edge (16) of a recess (13) of the shaft (10), and, after the handle (1) is pulled downwards and upwards again, during the downward rotation of the handle (1) the locking side (14) engaging on a locking edge (22) of a further recess (21) of the shaft (10).

2. Device according to Claim 1, characterized in that the rotational movement of the shaft (10) is transmitted to a Bowden cable (17) by means of a wheel mechanism having a rack.

3. Device according to Claim 2, characterized in that there is arranged on the first bolt (4) a recess (7), into which engages a second bolt (6) which is arranged on the shaft part (3) and which, when the handle (1) is pulled, limits the travel of the grip part (2) having the first bolt (4), the nose (12) of the first bolt (4) being lifted out of one of the recesses (13, 21) of the shaft (10).

4. Device according to one of the preceding claims, characterized in that there is provided at least one slide (20) which is arranged in a housing (24) and is actuated by the Bowden cable (17) and which transmits the rotational movement of the handle (1) to a first disc (33) which is arranged on a square bearing journal (35) actuating the pivoting and locking mechanism (SVM).

5. Device according to Claim 4, characterized in that the slide (20) has articulated on it a pull rod (26) which actuates a second disc (36) which lifts a first roller (43) out of a recess (46) which is arranged on the first disc (33) and in which the first roller (43) locks the swing-and-slide door in the pre-catching position.

6. Device according to one of the preceding claims, characterized in that an energy store (47, 65) is provided, in which energy generated by means of the manual sliding movement of the door is stored, the pivoting and locking movement of the pivoting and locking mechanism (SVM) being executed by means of the said energy.

7. Device according to Claim 6, characterized in that a rotatably arranged first cylinder (47) with a second piston rod (49) carrying a second roller (50) is provided, the second roller (50) being guided by a control cam (51) as far as a dead centre position (T1), and in that there is provided a first lever (52) arranged on the square bearing journal (35) and having a fork (53) which engages on the second piston rod (49) and which moves the latter beyond the dead centre position (T1), after which the pivoting and locking mechanism (SVM) is locked by means of the energy stored in the first cylinder.

8. Device according to Claim 6, characterized in that, during the manual sliding movement, normally a sliding cylinder (64) executing the sliding movement of the door acts as a pressure generator and there is provided a pressure vessel (65) for storing the compressed air which loads a working cylinder (54) for executing the pivoting and locking movement of the pivoting and locking mechanism (SVM).

## Revendications

1. Dispositif de déverrouillage et de verrouillage pour une porte coulissante et louvoyante, qui autorise, respectivement empêche, un mouvement de la porte, comprenant un organe d'actionnement (1, 17, 20, 47), qui actionne un mécanisme rotatif (33, 35, 36) qui, par un mouvement de rotation, libère un mécanisme de pivotement et de verrouillage (SVM) pour un mouvement manuel de la porte, respectivement le bloque contre un mouvement manuel de la porte, caractérisé en ce que
a) l'organe d'actionnement présente une poignée rotative (1) avec une manette (2) et une pièce d'arbre (3) disposée sur celle-ci, en ce que
b) une première broche (4), qui est guidée par la pièce d'arbre (3), est installée sur la manette (2), en ce que
c) la première broche (4) présente un ergot (12), qui comprend un côté de verrouillage (14) et un côté de déverrouillage (15), et en ce que
d) un arbre rotatif (10) est disposé sur la pièce d'arbre (3),
dans lequel le côté de déverrouillage (15) s'accroche, par rotation de la poignée (1) vers le haut, à une arête de déverrouillage (16) d'un évidement (13) de l'arbre (10) et, après que la poignée (1) ait été tirée vers le bas puis à nouveau vers le haut, le côté de verrouillage (14) s'accroche, par rotation de la poignée (1) vers le bas, à une arête de verrouillage (22) d'un autre évidement (21) de l'arbre (10).

2. Dispositif suivant la revendication 1, caractérisé en ce que le mouvement de rotation de l'arbre (10) est transmis à un câble Bowden (17) au moyen d'un engrenage avec crémaillère.

3. Dispositif suivant la revendication 2, caractérisé en ce qu'un évidement (7) est disposé dans la première broche (4), dans lequel s'engage une deuxième broche (6) disposée sur la pièce d'arbre (3), qui limite la course de la manette (2) avec la première broche (4) lorsque la poignée (1) est tirée, l'ergot (12) de la première broche (4) étant soulevé hors d'un des évidements (13, 21) de l'arbre (10).

4. Dispositif suivant l'une quelconque des revendications précédentes, caractérisé en ce qu'il est prévu au moins un coulisseau (20) disposé dans un boîtier (24) et actionné par le câble Bowden (17), qui transmet le mouvement de rotation de la poignée (1) à un premier disque (33), qui est disposé sur un tourillon carré (35) actionnant le mécanisme de pivotement et de verrouillage (SVM).

5. Dispositif suivant la revendication 4, caractérisé en ce qu'au coulisseau (20) est articulée une bielle (26), qui actionne un deuxième disque (36), qui soulève un premier galet (43) hors d'un évidement (46) disposé sur le premier disque (33), et dans lequel le premier galet (43) verrouille la porte coulissante et louvoyante dans la position de pré-encliquetage.

6. Dispositif suivant l'une quelconque des revendications précédentes, caractérisé en ce qu'il est prévu un accumulateur d'énergie (47, 65), dans lequel est stockée l'énergie qui est produite par le mouvement d'ouverture manuelle de la porte et avec laquelle on effectue le mouvement de pivotement et de verrouillage du mécanisme de pivotement et de verrouillage (SVM).

7. Dispositif suivant la revendication 6, caractérisé en ce qu'il est prévu un premier cylindre pouvant tourner (47) avec une deuxième tige de piston (49) portant un deuxième galet (50), dans lequel le deuxième galet (50) est conduit jusqu'à une position de point mort (T1) par une came de commande (51) et en ce qu'il est prévu un premier levier (52) disposé sur le tourillon carré (35), avec une fourche (53) qui s'accroche à la deuxième tige de piston (49) et déplace celle-ci au-delà de la position de point mort (T1), après laquelle le mécanisme de pivotement et de verrouillage (SVM) est verrouillé avec l'énergie stockée dans le premier cylindre.

8. Dispositif suivant la revendication 6, caractérisé en ce que, lors du mouvement coulissant manuel, un cylindre de glissement (64) exécutant le mouvement coulissant travaille normalement en générateur de pression et en ce qu'il est prévu un réservoir sous pression (65) pour le stockage de l'air comprimé, avec lequel on alimente un cylindre de travail (54) pour l'exécution du mouvement de pivotement et de verrouillage du mécanisme de pivotement et de verrouillage (SVM).
